# EUROPÄISCHE PATENTSCHRIFT

(11) **EP 3 626 793 B1**
(45) Veröffentlichungstag und Bekanntmachung des Hinweises auf die Patenterteilung: **01.11.2023**
(21) Anmeldenummer: 19198807.0
(22) Anmeldetag: 20.09.2019
(51) Int. Cl.: C09J 7/40

(54) **KLEBEBAND MIT GEFORMTER ABZIEHLASCHE UND VERFAHREN ZUR HERSTELLUNG EINES SOLCHEN KLEBEBANDES**
ADHESIVE TAPE HAVING A STRUCTURED PULL-OFF STRIP AND METHOD FOR MANUFACTURING SUCH AN ADHESIVE TAPE
BANDE ADHÉSIVE POURVUE DE LANGUETTE DE DÉTACHEMENT MOULÉE ET PROCÉDÉ DE FABRICATION D'UNE TELLE BANDE ADHÉSIVE

(30) Priorität: 21.09.2018 DE 102018216112
(43) Veröffentlichungstag der Anmeldung: 25.03.2020
(73) Patentinhaber: tesa SE, 22848 Norderstedt (DE)
(72) Erfinder: WATZKE, Wilhelm, 22303 Hamburg (DE); KÜHNE, Kevin, 20146 Hamburg (DE)
(74) Vertreter: tesa SE

(56) Entgegenhaltungen:
- EP-A1- 2 206 759
- EP-A2- 2 352 137
- DE-C1- 3 315 271

## Beschreibung

Die vorliegende Erfindung betrifft ein Klebeband mit einem Trennmaterial und einem daraus geformten Abziehlaschenbereich zum Entfernen des Trennmaterials. Darüber hinaus betrifft die Erfindung einen Klebebandnutzen und ein Verfahren zum Herstellen eines solchen Klebebands mit geformtem Abziehlaschenbereich.

Klebebänder existieren in einer Vielzahl von Ausführungsformen und Varianten. Sie weisen Lauflängen von einigen 10 m bis zu 30.000 m auf. Die Breiten von Klebebändern betragen üblicherweise zwischen 10 mm und 30 mm, aber auch andere Breiten werden hergestellt. In der Regel besteht ein Klebeband aus einem Träger und mindestens einer darauf aufgebrachten Klebemasse. Es existieren aber auch Klebebänder ohne Träger.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln auf ein Trennmaterial (auch als Abdeckmaterial bezeichnet) aufgebracht, das zusammen mit dem Klebeband aufgewickelt wird. Dem Fachmann sind derartige Trennmaterialien auch unter den Namen Releaseliner oder Liner bekannt. Neben der Abdeckung von ein- oder doppelseitig klebenden Klebebändern werden Liner auch zur Eindeckung von Etiketten eingesetzt.

Bei der händischen oder maschinellen Verarbeitung von Klebebändern mit Trennmaterial besteht häufig das Problem, dass sich das Trennmaterial nicht einfach von dem Klebeband ablösen lässt, um es zu verkleben. Dies liegt zum einen daran, dass sowohl das Klebeband als auch das Trennmaterial sehr dünn sind. Übliche Dicken für Klebebänder und Trennmaterialien liegen im Bereich von 10 µm bis 1 mm, weshalb an einer Schnittkante eines Klebebandes nur wenig Angriffsfläche besteht, um das Trennmaterial bei Bedarf auf Anhieb zu entfernen. Zum anderen sorgt auch die häufig sehr flexible und gummiartige Klebemasse dafür, dass an den Schnittkanten des Klebebandes nahezu kein Spalt zwischen Klebemasse und Trennmaterial besteht, in den mit einem Finger, Fingernagel oder einem Hilfsmittel hineingegriffen oder untergehakt werden könnte.

Zum einfacheren Abheben des Trennmaterials kann das Trennmaterial breiter als die Klebemasse ausgeführt werden, wodurch eine Abziehlasche, auch Fingerlift genannt, am Rand senkrecht zur Längsrichtung eines Klebebandes entsteht.

Aus der DE 10 2014 110 218 A1 ist es bekannt, dass eine Trennlage mit einer Abziehlasche versehen werden kann, um das Entfernen einer Trennlage von einer Basisbandschicht zu unterstützen.

Die US 2017/0266066 A1 beschreibt einen Fingerlift, der das Abziehen und Entfernen eines einseitig mit Klebemasse beschichteten Klebebandes erleichtert. Dabei wird eine rechteckige Lasche geformt, die das Greifen erleichtern soll. Das Klebeband samt Abziehlasche kann auch als Rolle oder auf einer Spule gelagert werden.

Die EP 2 352 137 A2 beschreibt ein Etikettenblatt mit auf einem Liner aufgebrachten Etiketten, die lösbar mit dem Liner verbunden sind. Der Liner enthält eine geschwächte Trennlinie. Die geschwächte Trennlinie liegt zumindest teilweise unter einem Etikett. Die geschwächte Trennlinie enthält auch einen Vorsprung.

Die DE 33 15271 C1 beschreibt einen flächenförmigen Laminatabschnitt aus einem Substrat und einer Abdeckung, bei dem der Verbund zwischen Abdeckung und Substrat eine mechanische Wiederablösung der Abdeckung durch Abziehen erlaubt. Die Abdeckung weist eine Abziehhilfe auf, die Schnitte oder Sollbruchlinien aufweist. Die Schnitte oder Sollbruchlinien verlaufen in der Abdeckung im Bereich von Biegelinien.

Die EP 2 206 759 A1 beschreibt eine Klebstoffzubereitung, umfassend einen Klebstoffzubereitungs-Hauptkörper mit einem Träger und einer Klebstoffschicht, die auf mindestens eine Oberfläche des Trägers laminiert ist, und eine Trennschicht, die auf einer Oberfläche, auf der der Trägerseite der Klebstoffschicht gegenüberliegenden Seite ausgebildet ist.

Nachteilig am Stand der Technik ist, dass bei Klebebändern mit Trennmaterial, an denen eine Abziehlasche ausgebildet ist, bei der Herstellung vermehrt Ausschuss von Klebemasse und gegebenenfalls Trägermaterial entsteht.

Weiterhin ist am Stand der Technik nachteilig, dass bei der Verarbeitung von Klebebändern mit Trennmaterial mit Abziehlasche viel Abfall durch das Trennmaterial entsteht. Es wird kurz vor dem Applizieren des Klebebandes von der Klebemasse abgezogen und hat dann keine Verwendung mehr.

Aufgrund dieser Nachteile des Standes der Technik, werden mehr Ressourcen zur Herstellung benötigt. Hierdurch sind Klebebänder mit Abziehlasche in der Herstellung zudem auch weniger kosteneffizient herzustellen als Klebebänder ohne Abziehlasche.

Aufgabe der vorliegenden Erfindung ist es daher, Klebebänder mit Abziehlasche bereitzustellen, bei deren Herstellung der Materialausschuss reduziert wird und bei deren Verarbeitung die Abfallmenge verringert wird.

Gelöst wird diese Aufgabe durch ein Klebeband, welches einen Abziehlaschenbereich umfasst, wie es im Hauptanspruch niedergelegt ist.

Weiterhin wird die erfindungsgemäße Aufgabe durch einen Klebebandnutzen sowie einem Verfahren zum Herstellen eines solchen Klebebandes gelöst.

Gegenstand der Erfindung ist somit ein Klebeband umfassend eine Klebemasse und ein Trennmaterial, wobei
- das Trennmaterial einen Abziehlaschenbereich und einen Klebemassenbereich umfasst, und
- auf dem Klebemassenbereich die Klebemasse aufgebracht ist, und
- wobei sich das Klebeband entlang einer Längsrichtung des Klebebands erstreckt und sich der Abziehlaschenbereich senkrecht zu der Längsrichtung des Klebebandes erstreckt,
dadurch gekennzeichnet, dass
das Klebeband derart ausgebildet ist, dass die Erstreckung des Abziehlaschenbereichs entlang der Längsrichtung variiert.

Im Sinne der Erfindung werden unter Klebebändern alle flächigen Gebilde wie in zwei Dimensionen ausgedehnte Folien oder Folienabschnitte, Bänder mit ausgedehnter Länge und begrenzter Breite, Bandabschnitte und dergleichen, verstanden. Ein Klebeband im Sinne der Erfindung kann ein- oder beidseitig mit einer Klebemasse beaufschlagt sein. Üblicherweise weisen Klebebänder Lauflängen von wenigen 10 m bis 30.000 m auf. Übliche Breiten von Klebebandrollen oder Klebebandspulen sind 10, 15, 19, 25 und 30 mm. Aber auch andere Lauflängen und Klebebandbreiten existieren und sind von der erfindungsgemäßen Lehre nicht ausgenommen. Das Klebeband kann sowohl in Form einer Rolle, also in Form einer archimedischen Spirale auf sich selbst aufgerollt, oder auf einem Spulenkörper aufgewickelt sein.

Eine Klebemasse im Sinne der Erfindung kann ein Kleber auf Basis von Naturkautschuk, Synthesekautschuk oder Acrylat umfassen. Aber auch andere Kleber können eingesetzt werden. Die Klebemasse kann neben dem Kleber zusätzlich Stoffe umfassen wie z.B. chemische oder mechanische Stabilisatoren, Farbpigmente, Fasern, Granulate, phosphoreszierende Stoffe, medizinisch wirksame Stoffe oder Medikamente, magnetische oder magnetisierbare Partikel, oder andere Stoffe, die die Eigenschaften der Klebemasse konditionieren können. Insbesondere ist unter einer Klebemasse auch eine Haftklebemasse zu verstehen.

Unter einem Klebemassenbereich soll im Sinne der Erfindung ein Bereich verstanden werden, in dem Klebemasse aufgebracht ist oder aufgebracht wird.

Unter einem Trennmaterial ist im Sinne der Erfindung ein Material zu verstehen, welches auf einer Klebemasse aufgebracht wird und diese teilweise oder vollständig abdeckt. Das Trennmaterial soll dabei zwar an der Klebemasse haften, aber keine innige, also stoffschlüssige, Klebeverbindung mit dieser eingehen, damit das Trennmaterial bei Verwendung des Klebebandes möglichst rückstandslos entfernt und möglichst einfach abgezogen werden kann. Trennmaterialien können aus verschiedenen Materialien bestehen. Als Trennmaterial eignen sich bevorzugt nicht-fusselnde Materialien, die keine stoffschlüssige Verbindung mit der Klebmasse eingehen.

Unter einem Abziehlaschenbereich im Sinne der erfindungsgemäßen Lehre wird ein Bereich verstanden, der eine Abziehlasche aus Trennmaterial bildet. Insbesondere weist ein Abziehlaschenbereich keine Klebemasse auf. Der Abziehlaschenbereich wird aus Trennmaterial ausgebildet, welches über die Klebemasse übersteht, z.B. an einer Seite der Klebemasse oder an zwei Seiten. Das überstehende Trennmaterial kann dabei auch nur teilweise oder abschnittsweise überstehen.

Der Abziehlaschenbereich erleichtert das manuelle oder maschinelle Entfernen des Trennmaterials und ist derart ausgebildet, dass ausreichend Angriffsfläche besteht, um das Trennmaterial möglichst einfach mit Fingern zu greifen oder zumindest mit einem Fingernagel anzuheben, um das Trennmaterial in Folge greifen zu können, um es dann von der Klebemasse abzuziehen oder einer maschinellen Vorrichtung genügend Angriffsfläche zu geben, um das Trennmaterial zuverlässig abzuheben.

Unter einer Längsrichtung des Klebebands wird diejenige Richtung verstanden, in der ein Klebeband üblicherweise abgerollt wird. In der Regel ist diese Richtung durch die längliche Ausdehnung des Klebebandes bestimmt. Bei Klebebandabschnitten oder Klebebandzuschnitten, deren Ab- oder Zuschnitt kürzer ist als die Breite des Klebemassenbereiches, ist die Längsrichtung des Klebebandes durch die kürzere Ausdehnung des Ab- oder Zuschnitts bestimmt. Unter Ab- oder Zuschnitten sollen auch Stanzlinge verstanden werden.

Unter einer Erstreckung im Sinne der erfindungsgemäßen Lehre soll eine Ausdehnung in eine bestimmte Richtung verstanden werden, insbesondere, dass sich ein Material oder ein Bereich in eine bestimmte Richtung ausdehnt oder fortsetzt. Dabei weist eine Erstreckung an sich keine bestimmte Form auf, sie kann jedoch eine bestimmte Form oder Kontur beschreiben.

Das erfindungsgemäße Klebeband kann vorteilhaft weitergebildet werden, indem die Erstreckung wellenförmig oder halbkreisförmig oder dreieckförmig oder rechteckförmig oder sägezahnförmig oder trapezförmig oder sinusförmig variiert oder in einer Kombination mindestens zweier dieser Formen variiert.

Diese Verläufe sind vorteilhaft, da dadurch der Materialbedarf zum Ausbilden der Abziehlaschenbereiche verringert werden kann, insbesondere im Vergleich zu gerade verlaufenden Abziehlaschenbereichen halbiert werden kann. Insbesondere handelt es sich bei den vorgenannten Verläufen, um Verläufe, die auf einfache Weise durch mathematische Funktionen beschrieben werden können. Dies erleichtert das Herstellen und Einrichten von Trennwerkzeugen, das Einrichten von Herstellungsmaschinen sowie die Prognose und Quantifizierung von Produktion und Ausschuss.

Es kann weiterhin vorgesehen sein, dass mindestens ein Abziehlaschenbereich Löcher umfasst, z. B. können Löcher in die Abziehlaschenbereiche eingestanzt sein. Mit diesen Löchern kann in manchen Anwendungen der Transport eines Klebebands in Herstellungsmaschinen und/oder Dispensern verbessert werden. Förderwalzen weisen dann entsprechende Zinken auf, die in die Löcher eingreifen und das Klebeband durch eine Herstellungsmaschine oder einen Dispenser befördern. Diese Art der Fördertechnik ist auch als "Traktorförderung" bekannt und hat den Vorteil eines genauen Transports des Klebebandes.

Diese Verläufe der Erstreckung können auch dahingehend vorteilhaft sein, als dass sie zur Kennzeichnung und Unterscheidung von Klebebandprodukten dienen können. Beispielsweise können durch verschiedene Formung der Abziehlaschenbereiche Klebebandprodukte visuell voneinander unterschieden werden und gegebenenfalls sogar Rückschlüsse auf den Klebebandtyp abgeleitet werden.

Es kann weiterhin bevorzugt sein, dass die vorgenannten Verläufe kombiniert werden. So kann der Verlauf beispielsweise in einem ersten Abschnitt eine erste Form aufweisen und in einem zweiten, an den ersten Abschnitt anschließenden Abschnitt, einen zweiten Verlauf entlang der Längsrichtung des Klebebandes aufweisen. Beispielsweise kann ein einige Zentimeter langer erster Abschnitt einen halbkreisförmigen Verlauf aufweisen, ein sich daran anschließender zweiter Abschnitt kann dann einen dreieckförmigen Verlauf aufweisen. Dies kann vorteilhaft sein, da dadurch bereits optisch der Klebebandtyp unterschieden werden kann, was dazu führt, dass verschiedene Klebebänder nicht ohne weiteres verwechselt werden. Dies kann bei der Verarbeitung in Fertigungslinien, z.B. Automobilfertigung oder Elektronikfertigung vorteilhaft sein, da es die Qualität der jeweiligen Endprodukte verbessern kann.

Das erfindungsgemäße Klebeband kann weitergebildet werden, indem die Erstreckung stetig variiert. Unter dem Begriff stetig soll eine gleichmäßige Variation verstanden werden. Insbesondere soll darunter verstanden werden, dass keine Unstetigkeitsstellen im mathematischen Sinne vorliegen. Wie eingangs beschrieben wurde, handelt es sich bei Trennmaterialien um Folien oder Papiere. Diese sind per Definition dünn und reißen mitunter schnell ein, sobald zu große Kräfte auf das Material einwirken. Häufig reißt an dem Klebeband dann zudem nicht nur das Trennmaterial ein, sondern der Riss setzt sich häufig auch in die Klebemasse und den gegebenenfalls vorhandenen Träger fort. Dadurch kann es zur Aufwölbung oder Kantenbildung der Klebemasse und des gegebenenfalls vorhandenen Trägers kommen, wodurch die Dicke des Klebebandes nicht mehr einheitlich ist. Solch eine Maßabweichung kann insbesondere bei der teilautomatischen oder vollautomatischen Verarbeitung von Klebebändern, beispielsweise mit Dispensern, zu einer Vielzahl von Problemen führen (Verkleben in einer Maschine, Komplettriss des Klebebands, Herunterrutschen von Transportrollen, usw.) und kann dann zu erheblichen Verzögerungen in Produktions- und Montageprozessen führen. Auch bei der händischen Montage kann die Maßhaltigkeit eines Montageprozesses durch Aufwölbungen oder Kantenbildung beeinflusst werden. Zudem kann ein an- oder eingerissener Träger in der Regel nicht mehr die Zug- und Scherkräfte aufnehmen, für die er spezifiziert und getestet wurde.

Insbesondere in spitzen und rechten Winkeln kommt es zur Rissbildung. Aber auch in stumpfen Winkeln kann es zur Entstehung von Rissen kommen. Risse bilden sich insbesondere an Stellen, in denen eine Trennkante unstetig verläuft.

Um die vorgenannten Probleme zu vermeiden, kann es erfindungsgemäß vorgesehen sein, dass die Erstreckung stetig variiert, da dann keine Ecken ausgebildet werden und somit ein Einreißen des Trennmaterials vermieden werden kann. Dies kann beispielsweise auch durch die Verrundung von Spitzen und Ecken erfolgen, also einer Verrundung des Verlaufs. Solch eine Verrundung kann beispielsweise einen bestimmten Radius aufweisen, wie dies auch aus der Konstruktionstechnik bekannt ist.

Um die Neigung zur Rissbildung zu reduzieren, kann auch ein Trennmaterial eingesetzt werden, welches an sich bereits eine geringe Neigung zur Rissbildung aufweist. Dies können beispielsweise Trennmaterialien aus hochverdichtetem Polyethylen (HDPE, PEHD) sein oder auch Verbundmaterialien aus Polypropylen und Polyethylen. Solch ein Material kann selbstverständlich auch den vorangegangen verrundeten Verlauf aufweisen, um die Neigung zur Rissbildung weiter zu senken.

Das erfindungsgemäße Klebeband kann weitergebildet werden, indem die Erstreckung periodisch entlang der Längsachse variiert. Dies ist vorteilhaft, da sich hierdurch die Herstellung des Klebebands vereinfacht und die Herstellung effizienter erfolgen kann. Beispielsweise können scheibenförmige Messer, wie Rollenmesser oder zylindrische Stanzmesser eingesetzt werden, auf deren Umfang mindestens eine Schneide ausgebildet ist, die mindestens eine Periode der periodisch ausgeführten Erstreckung erzeugen kann. Dies ermöglicht insbesondere höhere Produktionsgeschwindigkeiten, da zur Herstellung solcher periodischen Verläufe rotierende Werkzeuge wie Rollen und Zylinder eingesetzt werden können und das Erzeugen des geformten Abziehlaschenbereiches besonders zeiteffizient möglich ist. Generell eigenen sich hierzu alle handelsüblichen Schneid-, Schlitz oder Stanzverfahren, die über eine ausreichende Präzision verfügen. Im Übrigen kann auch Laserlicht verwendet werden. Besonders bevorzugt ist es, rotierende Quetsch-Schneidmesser einzusetzen, wie sie aus EP 1 829 948 A2 bekannt sind.

Das erfindungsgemäße Klebeband kann weitergebildet werden, indem das Trennmaterial zusätzlich einen weiteren Abziehlaschenbereich umfasst, welcher gegenüberliegend zum Abziehlaschenbereich ausgebildet ist. Es kann vorteilhaft sein dass ein Klebeband einen weiteren Abziehlaschenbereich umfasst, um beispielsweise ein beidseitiges Abheben des Trennmaterials zu ermöglichen. Dies kann z.B. bei schlecht zugänglichen Montageorten von Vorteil sein. Dabei ist der weitere Abziehlaschenbereich vorzugsweise aus demselben Trennmaterial ausgebildet wie der Abziehlaschenbereich.

Das erfindungsgemäße Klebeband kann weitergebildet werden, indem das Trennmaterial eine Kunststofffolie ist. Diese Kunststofffolie besteht vorzugsweise aus Polyethylenterephthalat (PET), Polypropylen (PP), Polyethylen (PE) oder Hart-Polyethylen (HDPE bzw. PEHD), dem Fachmann auch bekannt als "High-density polyethylene" oder "polyethylene high-density". Es können auch monoaxial verstreckte Kunststofffolien aus Polypropylen, dem Fachmann auch bekannt als MOPP, oder aus monoaxial verstreckte Polyethylen bevorzugt sein. Ebenso sind Verbundmaterialien, beispielsweise aus Polypropylen (PP) und Polyethylen (PE), einsetzbar. Als Material für das Trennmaterial eignen sich aber auch Trennpapiere. Diese Trennpapiere sind häufig silikonhaltige Papiere oder verleimte langfaserige Papiere. Auch nicht-silikonisierte Materialien können als Trennmaterial eingesetzt werden. Diese Trennmaterialien haben den Vorteil, dass sie keine innige bzw. stoffschlüssige Verbindung mit der Klebemasse eingehen, sondern nur an ihr haften. Dadurch lassen sie sich leicht und rückstandsfrei von einer Klebemasse abziehen.

Zudem weisen diese Materialien auch in sehr dünnem Zustand eine ausreichende Zug- und Reißfestigkeit auf, um als Trennmaterial verwendet zu werden. Es kann besonders bevorzugt sein, Hart-Polyethylen (HDPE bzw. PEHD) als Trennmaterial zu verwenden, da dieses Material eine besonders hohe Reißfestigkeit aufweist.

Es kann weiterhin bevorzugt sein, dass das Trennmaterial zumindest auf einer Seite einer Kunststofffolie oder eines Trennpapiers eine Trennmaterialklebemasse aufweist. Dies kann vorteilhaft sein, um zu verhindern, dass ein aufgewickeltes Klebeband verrutscht oder sich eine Spule abwickelt.

Das erfindungsgemäße Klebeband kann vorteilhaft weitergebildet werden, indem die Erstreckung des Abziehlaschenbereiches höchstens kleiner oder gleich 25 mm ist, bevorzugt kleiner oder gleich 15 mm ist, besonders bevorzugt kleiner oder gleich 10 mm ist, noch weiter bevorzugt kleiner oder gleich 5 mm ist, noch weiter bevorzugt kleiner oder gleich 3 mm ist. Es kann vorteilhaft sein, dass die Erstreckung höchstens eine gewisse Länge aufweist. Dadurch kann beispielsweise sichergestellt werden, dass der Abziehlaschenbereich nicht weiter als eine gewisse Breite über die Klebemasse hinausragt, um zu verhindern, dass die Abziehlaschenbereiche durch mechanische Einwirkung von außen umgebogen oder geknickt oder sogar eingerissen oder abgerissen werden. So können negative Auswirkungen wie schlechtere manuelle oder maschinelle Verarbeitbarkeit vermieden werden. Auch die Klebemasse und ein gegebenenfalls vorhandener Träger werden so vor Rissen geschützt (vgl. vorangegangene Ausführungen zur Rissbildung).

Das erfindungsgemäße Klebeband kann vorteilhaft weitergebildet werden, indem die Erstreckung des Abziehlaschenbereiches mindestens größer 0 mm ist, bevorzugt größer oder gleich 10 mm ist, besonders bevorzugt größer oder gleich 5 mm ist, noch weiter bevorzugt größer oder gleich 3 mm ist, noch weiter bevorzugt größer oder gleich 0,5 mm ist. Es kann vorteilhaft sein, dass die Erstreckung mindestens eine geringe Länge aufweist. Dadurch ergibt sich entlang der Längsrichtung an der Klebemasse ein durchgängiger Abziehlaschenbereich. Somit wird eine Mindesterstreckung oder Offset im Abziehlaschenbereich ausgebildet. Dies hat den Vorteil, dass es entlang des Klebebandes an jeder Länge möglich ist, das Trennmaterial abzuheben da mindestens ein geringer Teil des Abziehlaschenbereiches über die Klebemasse hinausragt.

Das erfindungsgemäße Klebeband kann weitergebildet werden, indem das Klebeband ein zweiseitig klebend ausgeführtes Klebeband ist, mit einer oberen und einer unteren Klebemasse und mindestens die obere oder die untere Klebemasse mit dem Trennmaterial abgedeckt ist oder die obere und die untere Klebemasse mit einem oberen und einem unteren Trennmaterial abgedeckt sind. Anwendungsabhängig werden einseitige oder doppelseitige Klebebänder benötigt. Im Fall von doppelseitigen Klebebändern mit zwei Klebemassen kann es vorteilhaft sein, mindestens eine oder beide Klebemassen mit einem Trennmaterial abzudecken, wobei an dem Trennmaterial eine Abziehlasche oder Abziehlaschen ausgebildet ist/sind.

Darüber hinaus kann das erfindungsgemäße Klebeband weitergebildet werden, indem die Klebemasse eine Breite von 3 mm bis 40 mm, bevorzugt 4 mm bis 30 mm, weiter bevorzugt 5 mm bis 25 mm, weiter bevorzugt 6 mm bis 15 mm aufweist.

Weiterhin kann das erfindungsgemäße Klebeband weitergebildet werden, indem das Klebeband einen Träger umfasst, wobei mindestens ein Teil der Klebemasse zwischen dem Träger und dem Trennmaterial angeordnet ist, insbesondere, dass die Klebemasse auf dem Träger aufgebracht ist, und/oder der Träger in die Klebemasse eingebettet ist. Dies kann vorteilhaft sein, da ein Klebeband mit einem Träger höhere Zug- und Scherkräfte aufnehmen kann. Auch die Rissbildung und Rissausbreitung werden in vorteilhafter Weise durch einen Träger reduziert. Dabei ist der Träger auf der Klebemasse angeordnet, z.B. kann die Klebemasse auf dem Träger aufgebracht sein. Bevorzugter besteht der Träger aus Polypropylen (PP), monoaxial verstrecktes Polypropylen (MOPP), biaxial verstrecktes Polypropylen (BOPP), Polyvinylchlorid (PVC), Polyethylenterephthalat (PET), Vliese, Polyethylen (PE), Schäume aus Polyethylen oder auch Schäume aus Acrylat.

Der Träger kann auch vollständig in der Klebemasse eingebettet sein, sodass der Träger ein Verstärkungselement ist, der von einer Matrix aus Klebemasse umschlossen wird. Beispiele hierfür sind faserverstärkte Klebebänder oder Klebebänder mit Vliesträgern. Schließlich kann auch eine Kombination aus beiden vorgenannten Alternativen bevorzugt sein, also ein Träger der teilweise in die Klebemasse eingebettet ist und teilweise aus der Klebemasse heraussteht.

Weiterhin kann das erfindungsgemäße Klebeband weitergebildet werden, indem das Klebeband ein weiteres Trennmaterial umfasst, wobei das weitere Trennmaterial einen weiteren Klebemassenbereich umfasst, und wobei auf dem weiteren Klebemassenbereich die Klebemasse aufgebracht ist. Insbesondere bei doppelseitig ausgeführten Klebebändern kann es vorteilhaft sein, wenn ein weiteres Trennmaterial, welches die vorangegangenen Eigenschaften und Weiterbildungsformen des Trennmaterials aufweisen kann, vorgesehen wird. Insbesondere können mit einem weiteren Trennmaterial beide Klebemassen eines doppelseitigen Klebebandes abgedeckt werden.

Weiterhin kann das erfindungsgemäße Klebeband weitergebildet werden, indem das weitere Trennmaterial einen weiteren Abziehlaschenbereich umfasst. Die vorgenannte Weiterbildung eines Klebebandes durch ein weiteres Trennmaterial lässt sich weiterhin vorteilhaft fortbilden, indem in dem weiteren Trennbereich ein weiterer Abziehlaschenbereich ausgebildet wird. Dabei soll der weitere Abziehlaschenbereich, die vorangegangenen Eigenschaften und Weiterbildungsformen des Abziehlaschenbereichs aufweisen können. Somit ergeben sich letzten Endes mindestens zwei Klebemassenbereiche, deren Klebmassen mit jeweils einem Trennmaterial abgedeckt sind. Dabei lassen sich das Trennmaterial und das weitere Trennmaterial unabhängig voneinander entfernen. Dies kann Vorteile haben, wenn doppelseitige Klebebänder beispielsweise vorkonfektioniert, z.B. Zuschnitte erzeugt werden, und diese erst zu einem späteren Zeitpunkt verarbeitet werden sollen. Bei Transport und Lagerung sind die Klebemassenbereiche abgedeckt und die Klebemassen vor Verunreinigungen oder dem Verkleben geschützt.

Weiterhin wird die erfindungsgemäße Aufgabe gelöst durch einen Klebebandnutzen umfassend mehrere Klebebänder,
- die jeweils gemäß einer der vorhergehenden Ausführungen ausgebildet sind, wobei
- die jeweiligen Längsrichtungen der Klebebänder parallel zueinander angeordnet sind,

und ein erstes Klebeband mit einem ersten Abziehlaschenbereich und ein zweites Klebeband mit einem zweiten Abziehlaschenbereich derart angeordnet sind, dass
der erste Abziehlaschenbereich und der zweite Abziehlaschenbereich aneinander angrenzen.

Weiterhin wird die erfindungsgemäße Aufgabe gelöst, dadurch dass bei dem vorgenannten Klebebandnutzen der erste Abziehlaschenbereich und der zweite Abziehlaschenbereich wechselseitig ineinander eingreifen.

Unter einem Klebebandnutzen soll im Sinne der vorliegenden Erfindung ein rechteckförmiger oder quadratischer Bogen verstanden werden, aus dem durch Abtrennen oder Heraustrennen einzelner Bereiche, mindestens ein Klebeband erzeugt wird, insbesondere aus dem durch Abtrennen oder Heraustrennen von Bereichen ein erfindungsgemäßes Klebeband erzeugt wird. Unter einem Klebebandnutzen kann auch ein auf eine Spule aufgerollter oder auf einem Wickel aufgewickelter rechteckförmiger oder quadratischer Nutzen verstanden werden, beispielsweise auch eine Jumborolle oder eine Mutterrolle. Bevorzugt umfasst solch ein Klebebandnutzen bereits das Trennmaterial, auf dem die Klebemasse aufgetragen ist.

Durch diese Anordnung zweier erfindungsgemäßer Klebebänder auf einem Klebebandnutzen kann der Nutzen besonders effizient ausgenutzt werden. Der Grund hierfür ist, dass der erste und zweite Abziehlaschenbereich entlang der Längsrichtungen des ersten und zweiten Klebebands in ihrer Erstreckung variieren. Somit lassen sich der erste Abziehlaschenbereich und der zweite Abziehlaschenbereich wechselseitig ausbilden. Dabei bedeutet wechselseitig, dass, wenn sich die Erstreckung des ersten Abziehlaschenbereiches vergrößert, sich die Erstreckung des zweiten Abziehlaschenbereiches verringert. Insbesondere ist es bevorzugt, dass die Summe aus der Breite der Erstreckung des ersten Abziehlaschenbereiches und der Breite der Erstreckung des zweiten Abziehlaschenbereiches konstant entlang der Längsrichtung des Klebebands ist. Ist dies der Fall kann am meisten Trennmaterial eingespart werden.

Sofern die Verläufe der Abziehlaschenbereiche periodisch variieren, kann die wechselseitige Ausbildung der Abziehlaschenbereiche auch als eine Phasenverschiebung oder ein Phasenversatz zwischen den Verläufen der beiden Erstreckungen aufgefasst werden. Die Verschiebung der beiden periodischen Verläufe beträgt in der erfindungsgemäßen Ausführung 180° bzw. ein halbe Periode. Dies entspricht im geometrischen Sinne einer Spiegelung oder einer Invertierung der periodischen Verläufe der Erstreckungen.

Die vorgenannte Anordnung der Klebebänder auf einem Klebebandnutzen hat darüber hinaus den Vorteil, dass durch die wechselseitige Ausbildung der Abziehlaschenbereiche zwei benachbarte Klebebänder enger beieinander platziert werden können. Somit können bei unveränderter Größe bzw. Breite eines Klebebandnutzens bedeutend mehr Klebebänder aus einem Klebebandnutzen hergestellt werden. Dies führt in Folge zu einer bedeutend effizienteren Ausnutzung der eingesetzten Materialien und auch zu einer Reduktion der Herstellungskosten. Auch können somit mehr Klebebänder in der gleichen Zeit hergestellt werden.

Weiterhin wird die erfindungsgemäße Aufgabe gelöst durch ein Verfahren zum Herstellen von Klebebändern, umfassend die Schritte:
a) Bereitstellen eines Klebebandhalbzeuges, wobei das Klebebandhalbzeug mindestens einen Trennbereich umfasst, der auf einem Trennmaterial ausgebildet ist und der frei von Klebemasse ist,
b) Trennen im Trennbereich, derart, dass ein erster Abziehlaschenbereich eines ersten Trennmaterials eines ersten Klebebandes der Klebebänder erzeugt wird und ein zweiter Abziehlaschenbereich eines zweiten Trennmaterials eines zweiten Klebebandes der Klebebänder erzeugt wird, wobei
insbesondere ein erstes Klebeband und ein zweites Klebeband nach einem der Ansprüche 1 bis 12 gebildet werden.

Dabei wird unter einem Klebebandhalbzeug ein teilverarbeiteter Klebebandnutzen verstanden, bei dem bereits vorangegangene Verarbeitungsschritte durchgeführt wurden, wie beispielsweise das Beschneiden von Kanten oder das Auftragen einer Passivierungsschicht. Für das erfindungsgemäße Verfahren ist es bevorzugt, dass auf einem Klebebandhalbzeug bereits mindestens ein Trennbereich ausgebildet ist, der keine Klebemasse mehr enthält. Hierzu kann Klebemasse von dem Trennmaterial entfernt werden oder zuvor auf das Trennmaterial erst gar keine Klebemasse aufgetragen werden.

In einem weiteren Schritt wird das Klebebandhalbzeug dann innerhalb des Trennbereichs getrennt. Unter Trennen soll erfindungsgemäß das Schneiden oder Stanzen eines Materials mittels eines Trennwerkzeugs verstanden werden. Unter einem Trennwerkzeug ist jede Vorrichtungen zu verstehen, die ein Trennen des Trennmaterials ermöglicht. Dabei kann es sich um Vorrichtungen mit rotierenden oder drehenden Messern, Schneidmatrizen, Kreismessern oder Rakelmessern handeln. Ebenso kann es sich bei einem Trennwerkzeug auch um ein Stanzwerkzeug handeln. Generell eignen sich hierzu alle handelsüblichen Schneid-, Schlitz oder Stanzverfahren, die über eine ausreichende Präzision verfügen. Im Übrigen kann auch Laserlicht verwendet werden. Besonders bevorzugt ist es, rotierende Quetsch-Schneidmesser einzusetzen, wie sie aus EP 1 829 948 A2 bekannt sind.

Bevorzugt erfolgt das Trennen derart, dass dabei die im vorangegangen beschriebenen Klebebänder erzeugt werden.

Das erfindungsgemäße Verfahren kann vorteilhaft fortgebildet werden, indem vorbereitend zu dem Schritt a) in einem Schritt a') Mutterklebemasse, welche auf einem Muttertrennmaterial aufgetragen ist, derart strukturiert wird, dass mindestens ein Trennbereich freigelegt wird und ein Klebebandhalbzeug erzeugt wird, insbesondere, dass eine Mehrzahl von Trennbereichen freigelegt wird und ein Klebebandnutzen erzeugt wird.

Gemäß der erfindungsgemäßen Lehre ist unter einem Muttertrennmaterial eine unbearbeitete und lediglich urgeformte Bahn eines Trennmaterials zu verstehen. Unter einer Mutterklebemasse ist ein Erstauftrag einer Klebemasse auf ein Material, hier ein Muttertrennmaterial zu verstehen.

Das Freilegen des mindestens einen Trennbereichs kann beispielsweise durch Rakelmesser erfolgen oder durch Abstechen und Abheben der zu entfernenden Klebemasse. Dies kann vorteilhaft sein, da dann im Schritt b) ein Abziehlaschenbereich erzeugt werden kann und ein Schritt zum Abheben der Klebemasse des Trennmaterials, aus dem der Abziehlaschenbereich gebildet ist, freizulegen, verzichtet werden kann. Dies wäre ungleich komplizierter zu realisieren, da der Verlauf des Abziehlaschenbereichs entlang der Längsrichtung des Klebebandes variiert. In der Regel sind zudem Ausführungen bevorzugt, bei denen die geringste Erstreckung des Abziehlaschenbereiches 0 mm beträgt. In solch einem Fall wären dann einzelne, nicht zusammenhängende gestanzte oder geschnittene Abschnitte von Klebemasse von dem Muttertrennmaterial zu entfernen. Dies wäre nur mit sehr großem Aufwand möglich, wodurch beispielhaft der Vorteil, von Schritt a') ersichtlich wird.

Besonders bevorzugt wird eine Mehrzahl von Trennbereichen freigelegt und so ein Klebebandnutzen mit einer Mehrzahl von Trennbereichen bereitgestellt. So können simultan auch eine Mehrzahl von Klebebändern hergestellt werden.

Das erfindungsgemäße Verfahren kann vorteilhaft fortgebildet werden, indem vorbereitend zu dem Schritt a) oder a`) in einem Schritt a") auf ein Muttertrennmaterial eine Mutterklebemasse aufgebracht wird.

Dieser vorbereitende Schritt kann Teil des erfindungsgemäßen Verfahrens sein. Dabei wird durch den Schritt a") im weiteren Sinn der Klebebandnutzen bereitgestellt.

Das erfindungsgemäße Verfahren kann auch fortgebildet werden, indem vorbereitend zu dem Schritt a) in einem Schritt a‴) Klebemasse derart auf ein Muttertrennmaterial aufgetragen wird, sodass Trennbereiche entstehen. Es kann alternativ zu der vorangegangenen Ausführung bevorzugt sein, Klebemasse in Streifen auf ein Muttertrennmaterial aufzubringen. Die Verläufe dieser Streifen können wie eingangs erwähnt variieren, nämlich halbkreisförmig oder dreieckförmig oder rechteckförmig oder sägezahnförmig oder trapezförmig oder sinusförmig oder in einem Verlauf variieren, der mindestens einer Kombination zweier dieser Formen entspricht.

Beispielhafte Ausführungen werden in den Fig. 1 bis Fig. 7m dargestellt. Dabei zeigen:
- Fig. 1:: Klebeband mit Abziehlaschenbereich gemäß dem Stand der Technik.
- Fig. 2:: Klebeband mit Abziehlaschenbereich gemäß dem Stand der Technik (in anderer Darstellung).
- Fig. 3:: Beispielhafte Ausführungsform des erfindungsgemäßen Klebebands gemäß einer ersten Ausführungsvariante.
- Fig. 4:: Beispielhafte Ausführungsform des erfindungsgemäßen Klebebands gemäß einer zweiten Ausführungsvariante.
- Fig. 5:: Querschnitt durch die Schnittkante eines erfindungsgemäßen Klebebandes.
- Fig. 6:: Beispielhaftes Herstellungsverfahren von mehreren Klebebändern mit einem variierenden Abziehlaschenbereich.
- Fig. 7a: Halbkreisförmiger Verlauf
- Fig. 7b: Dreieckförmiger Verlauf
- Fig. 7c: Verrundeter dreieckförmiger Verlauf
- Fig. 7d: Rechteckförmiger Verlauf
- Fig. 7e: Verrundeter rechteckförmiger Verlauf
- Fig. 7f: Sägezahnförmiger Verlauf
- Fig. 7g: Verrundeter sägezahnförmiger Verlauf
- Fig. 7h: Trapezförmiger Verlauf
- Fig. 7i: Verrundeter trapezförmiger Verlauf
- Fig. 7j: Sinusförmiger Verlauf
- Fig. 7k: Verlauf mit abschnittsweise kombiniertem sinusförmigem und rechteckförmigem Verlauf
- Fig. 7l: Verlauf mit abschnittsweise unterschiedlichen halbkreisförmigen Verläufen
- Fig. 7m: Verlauf mit abschnittsweise sinusförmigem und geradem Verlauf

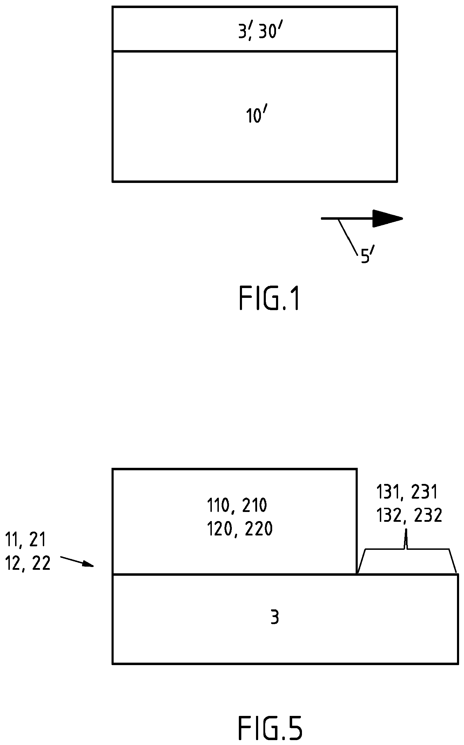

**Fig. 1** stellt eine schematische Draufsicht auf ein Klebeband gemäß dem Stand der Technik dar. Auf einem Trennmaterial 3' ist ein Klebemassenbereich 10' mit Klebemasse ausgebildet. Auf dem Trennmaterial 3' ist zudem ein Abziehlaschenbereich 30' ausgebildet. Da die Breite des Klebemassenbereiches kleiner ist als die des Trennmaterials, wird der Abziehlaschenbereich 30' ausgebildet. Da in Längsrichtung des Klebebandes 5' weder die Breite des Klebemassenbereiches 10' variiert, noch die Breite des Abziehlaschenbereiches 30`, verlaufen die Konturen von Klebemassenbereich 10` und Abziehlaschenbereich 30' parallel.

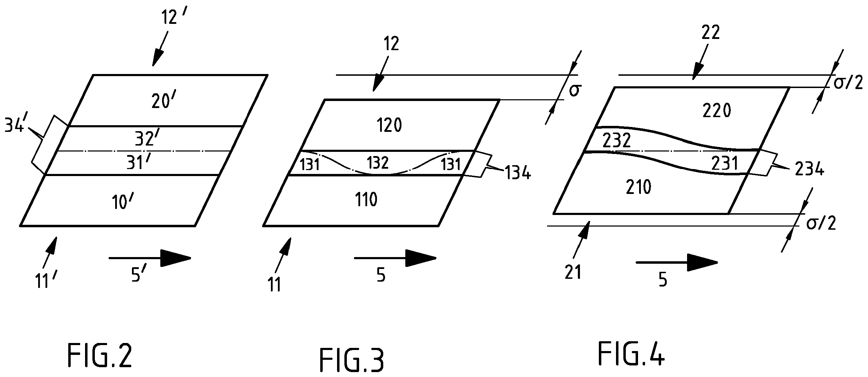

**Fig. 2** stellt einen perspektivischer Ausschnitt zweier Klebebänder 11 `, 12' ohne geformte Abziehlaschenbereiche 31', 32' dar. Die Klebemassenbereiche 10', 20' sind auf das Trennmaterial aufgebracht. Ein Trennbereich 34' ist frei von Klebemasse. Die Längsrichtung des Klebebandes ist mit Bezugszeichen 5' festgelegt.

**Fig. 3** ist im gleichen Maßstab wie Fig. 2 dargestellt und stellt einen perspektivischen Ausschnitt zweier erfindungsgemäßer Klebebänder 11, 12 mit zwei wechselseitig ausgebildeten Abziehlaschenbereichen 131, 132 und zwei Klebemassenbereichen 110, 120 dar. Dabei sind jeweils zwei Klebebänder 11, 12 entlang ihrer jeweiligen Längsrichtungen 5 parallel zueinander angeordnet. Zudem grenzen die Abziehlaschenbereiche 131, 132 des ersten und zweiten Klebebandes 11, 12 aneinander an.

Die Verläufe der **Abziehlaschenbereiche** 131, 132 sind bei den erfindungsgemäßen Klebebändern variierend ausgebildet. Dabei variiert der Verlauf der Erstreckung eines Abziehlaschenbereiches 131, 132 entlang der Längsrichtung 5 der erfindungsgemäßen Klebebänder 11, 12 sinusförmig. Der sinusförmige Verlauf des ersten Abziehlaschenbereiches 131 und der sinusförmige Verlauf des zweiten Abziehlaschenbereiches 132 weisen dabei einen Phasenversatz von 180° oder einer halben Periode auf.

Dadurch, dass die Abziehlaschenbereiche 131, 132 wechselseitig ausgebildet sind, wird die benötigte Breite des Trennbereichs 134 im Vergleich mit einem Klebeband ohne geformten Abziehlaschenbereich auf die Hälfte reduziert. Dabei beträgt die eingesparte Breite δ gerade die maximalen Erstreckung eines Abziehlaschenbereiches 131, 132, im Beispiel also der Amplitude des Sinusverlaufs.

**Fig. 4** ist im gleichen Maßstab wie Fig. 2 und 3 dargestellt und stellt einen perspektivischen Ausschnitt eines erfindungsgemäßen Klebebands 21, 22 gemäß einer zweiten Ausführungsform mit zwei wechselseitig ausgebildeten Abziehlaschenbereichen 231, 232 und zwei Klebemassenbereichen 210, 220 dar. Dabei sind jeweils zwei Klebebänder 21, 22 entlang ihrer jeweiligen Längsrichtungen 5 parallel zueinander angeordnet. Zudem grenzen die Abziehlaschenbereiche 231, 232 des ersten und zweiten Klebebandes 21, 22 aneinander an.

Die Verläufe der **Klebemassenbereiche** 210, 220 bei den erfindungsgemäßen Klebebändern sind variierend ausgebildet. Dabei variiert der Verlauf der Erstreckung eines Klebemassenbereiches 210, 220 entlang der Längsrichtung 5 der erfindungsgemäßen Klebebänder 21, 22 sinusförmig. Der sinusförmige Verlauf des ersten Klebemassenbereichs 210 und der sinusförmige Verlauf des zweiten Klebemassenbereichs 220 weisen dabei einen Phasenversatz von 180° oder einer halben Periode auf.

Dadurch, dass die Klebemassenbereiche 210, 220 wechselseitig ausgebildet sind, wird die benötigte Breite des Trennbereichs 234 im Vergleich mit einem Klebeband ohne geformten Abziehlaschenbereich auf die Hälfte reduziert. Dabei beträgt die eingesparte Breite, gerade die maximalen Erstreckung eines Abziehlaschenbereiches 231, 232, im Beispiel also der Amplitude des Sinusverlaufs. Diese eingesparte Breite teilt sich in Fig. 3 auf den oberen Bereich mit δ/2 und den unteren Bereich des Klebebandes mit δ/2 zu gleichen Teilen auf.

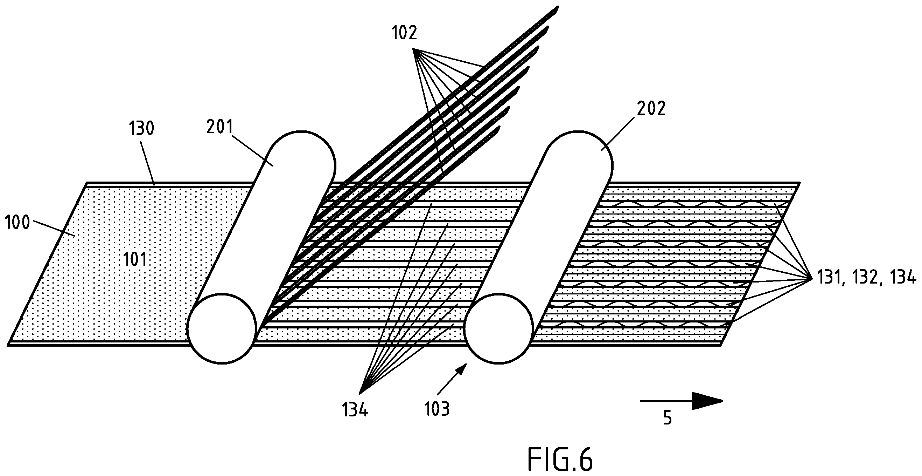

**Fig. 6** stellt schematisch das Herstellungsverfahren der erfindungsgemäßen Klebebänder dar. Dabei wird eine Vielzahl gleichartiger Klebebänder parallel hergestellt. Das Ausgangsmaterial 100 umfasst das Muttertrennmaterial 130 und die Mutterklebemasse 101 und wird durch eine erste Trenneinheit 201 mit einem Quetsch-Schneidmesser bearbeitet. Dabei wird die Mutterklebemasse 101 eingeschnitten, nicht jedoch das darunterliegende Muttertrennmaterial 130. Dadurch können Streifen von Klebemasse 102, beispielsweise durch Rakel oder andere Abziehvorrichtungen, von dem Trennmaterial abgehoben werden und das Klebebandhalbzeug 103 bereitgestellt werden. Die abgehobene Klebemasse kann dann weiterverwendet werden, um weitere Ausgangsmaterial bereitzustellen. Das Klebebandhalbzeug weist dann Trennbereiche 134 auf, innerhalb derer das Muttertrennmaterial später getrennt wird. Die abgehobenen Streifen 102 sind Ausschuss.

In einer zweiten Trenneinheit 202 werden innerhalb der Trennbereiche 134 die Abziehlaschenbereiche 131, 132 ausgebildet, indem die Trenneinheit 202 das Muttertrennmaterial 130 zerschneidet. Dies kann mittels einer der vorgenannten Trennmethoden erfolgen, vorzugsweise mit einem Quetsch-Schneidmesser. In diesem Trennvorgang erfolgt auch die Ausbildung der variierenden Erstreckung der Abziehlaschenbereiche 131, 132, beispielsweise sinusförmig. Die Werkzeuge der Trenneinheit 202 beschreiben dabei den Verlauf der Abziehlaschenbereiche 131, 132.

Zudem kann die Trenneinheit 202 den Klebemassenbereich 110, 120 samt des darunter angeordneten Muttertrennmaterials 130 trennen, sodass eine Vielzahl von Klebebändern bereitgestellt wird.

Dieses Herstellungsverfahren lässt sich mit den entsprechenden Anpassungen analog auch zu Herstellung von Klebebändern gemäß der zweiten Ausführungsform einsetzen.

**Fig. 5** stellt einen schematischen Querschnitt eines Klebebandes 11, 12, 21, 22 dar. Dabei ist das Klebeband derart angeordnet, dass die Längsrichtung des Klebebandes aus der Bildebene heraustritt bzw. in sie eintaucht. Auf einem Trennmaterial 3 sind der Klebemassenbereich 110, 120, 210, 220 und der Abziehlaschenbereich 131, 132, 231, 232 ausgebildet.

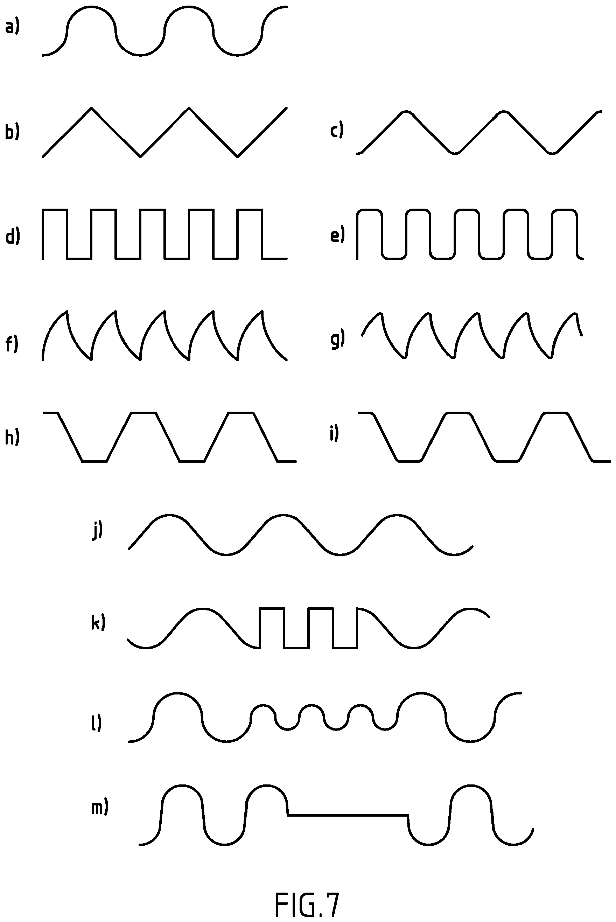

**Fig. 7a****-f** stellen exemplarisch und nicht abschließend einige bevorzugte Verläufe von Erstreckungen von Abziehlaschenbereichen dar. Es zeigen:
- Fig. 7a: Halbkreisförmiger Verlauf
- Fig. 7b: Dreieckförmiger Verlauf
- Fig. 7c: Verrundeter dreieckförmiger Verlauf
- Fig. 7d: Rechteckförmiger Verlauf
- Fig. 7e: Verrundeter rechteckförmiger Verlauf
- Fig. 7f: Sägezahnförmiger Verlauf
- Fig. 7g: Verrundeter sägezahnförmiger Verlauf
- Fig. 7h: Trapezförmiger Verlauf
- Fig. 7i: Verrundeter trapezförmiger Verlauf
- Fig. 7j: Sinusförmiger Verlauf
- Fig. 7k: Verlauf mit abschnittsweise kombiniertem sinusförmigem und rechteckförmigem Verlauf
- Fig. 7l: Verlauf mit abschnittsweise unterschiedlichen halbkreisförmigen Verläufen
- Fig. 7m: Verlauf mit abschnittsweise sinusförmigem und geradem Verlauf

### Vergleichsversuch

Das Potential dieser Erfindung lässt sich beispielhaft veranschaulichen, wenn man den Materialbedarf für Klebebänder mit nicht-geformten Abziehlaschenbereich mit dem Materialbedarf von Klebebändern vergleicht, die mit dem erfindungsgemäßen Verfahren hergestellt wurden. In den folgenden Beispielen wird von einer Mutterrolle mit einer Mutterrollenbreite B_{M} von 1 m ausgegangen. Die Breite des Klebemassenbereiches B_{K} variiert in den Beispielen 1-3 zwischen 10 mm und 20 mm. Ebenso variiert die Breite des Abziehlaschenbereiches B_{A} zwischen 4 mm und 8 mm. Bedingt durch die erfindungsgemäße wechselseitig ausgebildeten Abziehlaschenbereiche der erfindungsgemäßen Klebebänder, lassen sich erheblich mehr Klebebänder pro Klebebandnutzen herstellen und Trennmaterial einsparen. Insbesondere halbiert sich bei der parallelen Anordnung mehrerer Klebebandrollen auf einem Klebebandnutzen, die erforderliche Breite des Abziehlaschenbereiches B_{A} gegenüber einem ungeformten Abziehlaschenbereich. In den Beispielen ist weiterhin angenommen, dass kein minimaler Fingerlift vorgesehen ist. Die effektive Gesamtbreite B_{G} eines Klebebands ergibt sich aus der Breite des Klebemassenbereiches B_{K} und der Breite des Abziehlaschenbereiches B_{A}. Diese Breite ist diejenige Breite, die ein einzelnes Klebeband im Mittel (arithmetisches Mittel) über die gesamte Lauflänge einer Mutterrolle aufweist. Für die erfindungsgemäßen Klebebänder halbiert sich im Mittel daher die Breite des erforderlichen Abziehlaschenbereichs. Abhängig von den Parametern B_{K} und B_{A} ergeben sich unterschiedliche effektive Gesamtbreiten B_{Geff} eines einzelnen Klebebandes auf der Mutterrolle, weshalb sich auch die Anzahl, der aus einer Mutterrolle herstellbaren Klebebänder unterscheidet.

Die folgende Tabelle stellt anhand von drei Beispielen exemplarisch den prozentualen Zuwachs an erfindungsgemäßen Klebebändern pro Mutterrolle dar bezogen auf Klebebänder, die keinen geformten Abziehlaschenbereich aufweisen.

*** Die Breite der Mutterrolle B_{M} beträgt in den Beispielen 1 bis 3 stets 1 m.**

| | B_{K} [mm] | B_{A} [mm] | B_{Geff} [mm] | N_{K} [-]* | Δ [%] |
|---|---|---|---|---|---|
| **Beispiel 1:** | | | | | |
| Nicht-geformter Abziehlaschenbereich | 20 | 4 | 24 | 41 | - |
| geformter Abziehlaschenbereich | 20 | 4 | 22 | 45 | 9,7 |

| **Beispiel 2:** | | | | | |
|---|---|---|---|---|---|
| Nicht-geformter Abziehlaschenbereich | 14 | 6 | 20 | 50 | - |
| geformter Abziehlaschenbereich | 14 | 6 | 17 | 58 | 16,0 |

| **Beispiel 3:** | | | | | |
|---|---|---|---|---|---|
| Nicht-geformter Abziehlaschenbereich | 10 | 8 | 18 | 55 | - |
| geformter Abziehlaschenbereich | 10 | 8 | 14 | 71 | 29,1 |

- B_{M}: Breite der Mutterrolle
- B_{K}: Breite des Klebemassenbereiches
- B_{A}: Breite des Abziehlaschenbereiches
- B_{Geff}: Effektive Gesamtbreite des Klebebands auf der Mutterrolle
- N_{K}: Anzahl von Klebebandrollen pro Mutterrolle
- Δ: Prozentuale Materialersparnis pro Mutterrolle aufgrund der Verwendung der erfindungsgemäßen Klebebändern gegenüber nicht-geformtem Abziehlaschenbereich

Die drei Beispiele verdeutlichen, dass mit den erfindungsgemäßen Klebebändern in erheblichem Maße Material eingespart werden kann, bzw. das eingesetzte Material erheblich effizienter genutzt wird. Da sich der Abziehlaschenbereich in seiner effektiven Breite halbiert, wird auch der Ausschuss in Form von abgehobener Klebemasse im Wesentlichen halbiert. Dies trifft auch auf den Materialbedarf zum Ausbilden des Abziehlaschenbereiches zu. Durch die effizientere Materialausnutzung können auch mehr Klebebändern aus einer Mutterrolle hergestellt werden.

### Bezugszeichenliste

- 11, 21: erstes Klebeband
- 12, 22: zweites Klebeband
- 3: Trennmaterial
- 3': Trennmaterial
- 5: Längsrichtung eines Klebebandes
- 5': Längsrichtung eines Klebebandes
- 10': Klebemassenbereich
- 11', 12': erstes Klebeband mit nicht-geformten Abziehlaschenbereich
- 20': Klebemassenbereich
- 30': Abziehlaschenbereich
- 31', 32': nicht-geformter Abziehlaschenbereich
- 34': Trennbereich
- 100: Ausgangsmaterial
- 101: Mutterklebemasse
- 102: abgehobene Klebemasse
- 103: Klebebandhalbzeug
- 110, 210: erster Klebemassenbereich
- 120, 220: zweiter Klebemassenbereich
- 130: Muttertrennmaterial
- 131, 231: Abziehlaschenbereich des ersten Klebebands
- 132, 232: Abziehlaschenbereich des zweiten Klebebands
- 134, 234: Trennbereich
- 201: erste Trenneinheit
- 202: zweite Trenneinheit

## Patentansprüche

1. Klebeband (11, 12, 21, 22) umfassend eine Klebemasse und ein Trennmaterial (3),
wobei das Trennmaterial (3) einen Abziehlaschenbereich (131, 132, 231, 232) und einen Klebemassenbereich (110, 120, 210, 220) umfasst, und
auf dem Klebemassenbereich (110, 120, 210, 220) die Klebemasse aufgebracht ist, und
wobei sich das Klebeband (11, 12, 21, 22) entlang einer Längsrichtung des Klebebands (5) erstreckt und sich der Abziehlaschenbereich (131, 132, 231, 232) senkrecht zu der Längsrichtung des Klebebandes (5) erstreckt,
**dadurch gekennzeichnet, dass**
das Klebeband (11, 12, 21, 22) derart ausgebildet ist, dass die Erstreckung des Abziehlaschenbereichs (131, 132, 231, 232) entlang der Längsrichtung (5) stetig variiert und der Abziehlaschenbereich (131, 132, 231, 232) über die Klebemasse übersteht, wobei
das Klebeband (11, 12, 21, 22) als ein zweiseitig klebend ausgeführtes Klebeband ausgebildet ist, mit einer oberen und einer unteren Klebemasse und mindestens die obere oder die untere Klebemasse mit dem Trennmaterial (3) abgedeckt ist.

2. Klebeband (11, 12, 21, 22) nach Anspruch 1 **dadurch gekennzeichnet, dass** die Erstreckung halbkreisförmig oder dreieckförmig oder rechteckförmig oder sägezahnförmig oder trapezförmig oder sinusförmig variiert oder in einer Kombination mindestens zweier dieser Formen variiert.

3. Klebeband (11, 12, 21, 22) nach einem der vorhergehenden Ansprüche, **dadurch gekennzeichnet, dass** die Erstreckung periodisch entlang der Längsachse variiert.

4. Klebeband (11, 12, 21, 22) nach einem der vorhergehenden Ansprüche, **dadurch gekennzeichnet, dass** das Trennmaterial (3) zusätzlich einen weiteren Abziehlaschenbereich umfasst, welcher gegenüberliegend zum Abziehlaschenbereich (131, 132, 231, 232) ausgebildet ist.

5. Klebeband (11, 12, 21, 22) nach einem der vorhergehenden Ansprüche, **dadurch gekennzeichnet, dass** das Trennmaterial (3) eine Kunststofffolie oder ein Trennpapier ist.

6. Klebeband (11, 12, 21, 22) nach einem der vorhergehenden Ansprüche, **dadurch gekennzeichnet, dass** die Erstreckung des Abziehlaschenbereiches (131, 132, 231, 232) höchstens kleiner oder gleich 25 mm ist, bevorzugt kleiner oder gleich 15 mm ist, besonders bevorzugt kleiner oder gleich 10 mm ist, noch weiter bevorzugt kleiner oder gleich 5 mm ist, noch weiter bevorzugt kleiner oder gleich 3 mm ist und
die Erstreckung des Abziehlaschenbereiches (131, 132, 231, 232) mindestens größer 0 mm ist, bevorzugt größer oder gleich 10 mm ist, besonders bevorzugt größer oder gleich 5 mm ist, noch weiter bevorzugt größer oder gleich 3 mm ist, noch weiter bevorzugt größer oder gleich 0,5 mm ist.

7. Klebeband (11, 12, 21, 22) nach einem der vorhergehenden Ansprüche, **dadurch gekennzeichnet, dass** der Klebemassenbereich eine Breite von 3 bis 40 mm, bevorzugt 4 bis 30 mm, weiter bevorzugt 5 bis 25 mm, weiter bevorzugt 6 bis 15 mm aufweist.

8. Klebeband (11, 12, 21, 22) nach einem der vorhergehenden Ansprüche, **dadurch gekennzeichnet dass** das Klebeband (11, 12, 21, 22) einen Träger umfasst, wobei mindestens ein Teil der Klebemasse zwischen dem Träger und dem Trennmaterial (3) angeordnet ist, insbesondere, dass
- die Klebemasse auf dem Träger aufgebracht ist, und/oder
- der Träger in die Klebemasse eingebettet ist.

9. Klebeband (11, 12, 21, 22) nach einem der vorhergehenden Ansprüche, **dadurch gekennzeichnet, dass** das Klebeband (11, 12, 21, 22) ein weiteres Trennmaterial (3) umfasst, wobei das weitere Trennmaterial (3) einen weiteren Klebemassenbereich umfasst, und wobei auf dem weiteren Klebemassenbereich die Klebemasse aufgebracht ist.

10. Klebeband (11, 12, 21, 22) nach Anspruch 8, **dadurch gekennzeichnet, dass** das weitere Trennmaterial (3) einen weiteren Abziehlaschenbereich umfasst.

11. Klebebandnutzen umfassend mehrere Klebebänder (11, 12, 21, 22), die jeweils gemäß einem der vorhergehenden Ansprüche ausgebildet sind, wobei die jeweiligen Längsrichtungen der Klebebänder (5) parallel zueinander angeordnet sind,
**dadurch gekennzeichnet, dass**
ein erstes Klebeband (11, 21) mit einem ersten Abziehlaschenbereich (131, 231) und ein zweites Klebeband (12, 22) mit einem zweiten Abziehlaschenbereich (132, 232) derart angeordnet sind, dass
der erste Abziehlaschenbereich (131, 231) und der zweite Abziehlaschenbereich (132, 232) aneinander angrenzen.

12. Klebebandnutzen gemäß Anspruch 11, **dadurch gekennzeichnet, dass** der erste Abziehlaschenbereich (131, 132) und der zweite Abziehlaschenbereich (132, 232) wechselseitig ineinander eingreifen.

13. Verfahren zum Herstellen von Klebebändern, wobei die Klebebänder (11, 12, 21, 22) als zweiseitig klebend ausgeführte Klebebänder ausgebildet sind, mit einer oberen und einer unteren Klebemasse und mindestens die obere oder die untere Klebemasse mit einem Trennmaterial (3) abgedeckt ist, umfassend die Schritte:
a) Bereitstellen eines Klebebandhalbzeuges, wobei das Klebebandhalbzeug mindestens einen Trennbereich (134, 234) umfasst, der auf einem Trennmaterial (3) ausgebildet ist und der frei von Klebemasse ist,
b) Trennen im Trennbereich (134, 234), derart, dass ein erster Abziehlaschenbereich (131, 231) eines ersten Trennmaterials (3) eines ersten Klebebandes (11, 21) der Klebebänder erzeugt wird und ein zweiter Abziehlaschenbereich (132, 232) eines zweiten Trennmaterials (3) eines zweiten Klebebandes (12, 22) der Klebebänder erzeugt wird, wobei
ein erstes Klebeband (11, 21) und ein zweites Klebeband (12, 22) nach einem der Ansprüche 1 bis 11 gebildet werden.

14. Verfahren gemäß Anspruch 13, wobei vorbereitend zu dem Schritt a) in einem Schritt a') Mutterklebemasse (101), welche auf einem Muttertrennmaterial (130) aufgetragen ist derart strukturiert wird, dass mindestens ein Trennbereich (134, 234) freigelegt wird und ein Klebebandhalbzeug (103) erzeugt wird, insbesondere, dass eine Mehrzahl von Trennbereichen (134, 234) freigelegt wird und ein Klebebandhalbzeug (103) erzeugt wird.

15. Verfahren nach den Ansprüchen 13 oder 14, wobei vorbereitend zu dem Schritt a) oder a') in einem Schritt a") auf ein Muttertrennmaterial (130) eine Mutterklebemasse (101) aufgebracht wird.

16. Verfahren gemäß Anspruch 13, wobei vorbereitend zu dem Schritt a) in einem Schritt a‴) Klebemasse derart auf ein Muttertrennmaterial (130) aufgetragen wird, sodass Trennbereiche (134, 234) entstehen.

## Claims

1. Adhesive tape (11, 12, 21, 22) comprising an adhesive composition and a release material (3),
where the release material (3) comprises a peel tab region (131, 132, 231, 232) and an adhesive composition region (110, 120, 210, 220), and
the adhesive composition region (110, 120, 210, 220) bears the applied adhesive composition, and
where the adhesive tape (11, 12, 21, 22) extends along a lengthwise direction of the adhesive tape (5), and the peel tab region (131, 132, 231, 232) extends perpendicularly to the lengthwise direction of the adhesive tape (5),
**characterized in that**
the adhesive tape (11, 12, 21, 22) is configured such that the extent of the peel tab region (131, 132, 231, 232) along the lengthwise direction (5) varies continuously and the peel tab region (131, 132, 231, 232) overhangs the adhesive composition, where
the adhesive tape (11, 12, 21, 22) is configured as a two-sidedly adhesively configured adhesive tape having an upper and a lower adhesive composition, and at least the upper or the lower adhesive composition is lined with the release material (3).

2. Adhesive tape (11, 12, 21, 22) according to Claim 1, **characterized in that**
the extent varies semicircularly or triangularly or rectangularly or serratedly or trapezoidally or sinusoidally or varies in a combination of at least two of these forms.

3. Adhesive tape (11, 12, 21, 22) according to either of the preceding claims, **characterized in that** the extent varies periodically along the longitudinal axis.

4. Adhesive tape (11, 12, 21, 22) according to any of the preceding claims, **characterized in that** the release material (3) additionally comprises a further peel tab region, which is configured oppositely to the peel tab region (131, 132, 231, 232).

5. Adhesive tape (11, 12, 21, 22) according to any of the preceding claims, **characterized in that** the release material (3) is a polymeric film or a release paper.

6. Adhesive tape (11, 12, 21, 22) according to any of the preceding claims, **characterized in that** the extent of the peel tab region (131, 132, 231, 232) is at most less than or equal to 25 mm, preferably is less than or equal to 15 mm, more preferably is less than or equal to 10 mm, more preferably still is less than or equal to 5 mm, more preferably still is less than or equal to 3 mm, and
the extent of the peel tab region (131, 132, 231, 232) is at least greater than 0 mm, preferably is greater than or equal to 10 mm, more preferably is greater than or equal to 5 mm, more preferably still is greater than or equal to 3 mm, more preferably still is greater than or equal to 0.5 mm.

7. Adhesive tape (11, 12, 21, 22) according to any of the preceding claims, **characterized in that** the adhesive composition region has a width of 3 to 40 mm, preferably 4 to 30 mm, more preferably 5 to 25 mm, more preferably 6 to 15 mm.

8. Adhesive tape (11, 12, 21, 22) according to any of the preceding claims, **characterized in that** the adhesive tape (11, 12, 21, 22) comprises a carrier, where at least part of the adhesive composition is disposed between the carrier and the release material (3), more particularly in that
- the carrier bears the applied adhesive composition, and/or
- the carrier is embedded in the adhesive composition.

9. Adhesive tape (11, 12, 21, 22) according to any of the preceding claims, **characterized in that** the adhesive tape (11, 12, 21, 22) comprises a further release material (3), where the further release material (3) comprises a further adhesive composition region, and where the further adhesive composition region bears the applied adhesive composition.

10. Adhesive tape (11, 12, 21, 22) according to Claim 8, **characterized in that** the further release material (3) comprises a further peel tab region.

11. Adhesive tape utility comprising a plurality of adhesive tapes (11, 12, 21, 22), each configured according to any of the preceding claims, where the respective lengthwise directions of the adhesive tapes (5) are disposed parallel to one another,
**characterized in that**
a first adhesive tape (11, 21) having a first peel tab region (131, 231) and a second adhesive tape (12, 22) having a second peel tab region (132, 232) are disposed in such a way that
the first peel tab region (131, 231) and the second peel tab region (132, 232) border one another.

12. Adhesive tape utility according to Claim 11, **characterized in that** the first peel tab region (131, 132) and the second peel tab region (132, 232) reciprocally engage in one another.

13. Method for producing adhesive tapes, where the adhesive tapes (11, 12, 21, 22) are configured as two-sidedly adhesively configured adhesive tapes having an upper and a lower adhesive composition, and at least the upper or the lower adhesive composition is lined with a release material (3), comprising the steps of:
a) providing an adhesive tape precursor, where the adhesive tape precursor comprises at least one release region (134, 234) which is configured on a release material (3) and which is free from adhesive composition,
b) separating in the release region (134, 234) in such a way that a first peel tab region (131, 231) of a first release material (3) of a first adhesive tape (11, 21) of the adhesive tapes is generated and a second peel tab region (132, 232) of a second release material (3) of a second adhesive tape (12, 22) of the adhesive tapes is generated, where
a first adhesive tape (11, 21) and a second adhesive tape (12, 22) are formed according to any of Claims 1 to 11.

14. Method according to Claim 13, where preparatory to step a), in a step a'), parent adhesive composition (101) which is applied on a parent release material (130) is structured in such a way that at least one release region (134, 234) is exposed and an adhesive tape precursor (103) is generated, more particularly in such a way that a plurality of release regions (134, 234) are exposed and an adhesive tape precursor (103) is generated.

15. Method according to Claims 13 or 14, where preparatory to step a) or a'), in a step a"), a parent adhesive composition (101) is applied to a parent release material (130).

16. Method according to Claim 13, where preparatory to step a), in a step a‴), adhesive composition is applied to a parent release material (130) in such a way as to form release regions (134, 234).

## Revendications

1. Ruban adhésif (11, 12, 21, 22) comprenant une masse adhésive et un matériau antiadhésif (3), le matériau antiadhésif (3) comprenant une zone de languette de détachement (131, 132, 231, 232) et une zone de masse adhésive (110, 120, 210, 220), et
la masse adhésive étant appliquée sur la zone de masse adhésive (110, 120, 210, 220), et
le ruban adhésif (11, 12, 21, 22) s'étendant dans une direction longitudinale du ruban adhésif (5), et la zone de languette de détachement (131, 132, 231, 232) s'étendant perpendiculairement à la direction longitudinale du ruban adhésif (5),
**caractérisé en ce que**
le ruban adhésif (11, 12, 21, 22) est conçu de telle sorte que l'extension de la zone de languette de détachement (131, 132, 231, 232) dans la direction longitudinale (5) varie en permanence, et la zone de languette de détachement (131, 132, 231, 232) dépasse de la masse adhésive, dans lequel
le ruban adhésif (11, 12, 21, 22) est conçu comme un ruban adhésif double face, avec une masse adhésive supérieure et une masse adhésive inférieure, et au moins la masse adhésive supérieure ou la masse adhésive inférieure est recouverte du matériau antiadhésif (3).

2. Ruban adhésif (11, 12, 21, 22) selon la revendication 1, **caractérisé en ce que** l'extension présente une variation en demi-cercle ou triangulaire ou rectangulaire ou en dents de scie ou trapézoïdale, ou selon une combinaison d'au moins deux de ces formes.

3. Ruban adhésif (11, 12, 21, 22) selon l'une des revendications précédentes, **caractérisé en ce que** l'extension varie périodiquement le long de l'axe longitudinal.

4. Ruban adhésif (11, 12, 21, 22) selon l'une des revendications précédentes, **caractérisé en ce que** le matériau antiadhésif (3) comprend en outre une autre zone de languette de détachement, qui est formée opposée à la zone de languette de détachement (131, 132, 231, 232).

5. Ruban adhésif (11, 12, 21, 22) selon l'une des revendications précédentes, **caractérisé en ce que** le matériau antiadhésif (3) est une feuille plastique ou un papier antiadhésif.

6. Ruban adhésif (11, 12, 21, 22) selon l'une des revendications précédentes, **caractérisé en ce que** l'extension de la zone de languette de détachement (131, 132, 231, 232) est au plus inférieure ou égale à 25 mm, de préférence inférieure ou égale à 15 mm, d'une manière particulièrement préférée inférieure ou égale à 10 mm, encore plus préférentiellement inférieure ou égale à 5 mm, encore plus préférentiellement inférieure ou égale à 3 mm, et
l'extension de la zone de languette de détachement (131, 132, 231, 232) est au moins supérieure à 0 mm, de préférence supérieure ou égale à 10 mm, d'une manière particulièrement préférée supérieure ou égale à 5 mm, encore plus préférentiellement supérieure ou égale à 3 mm, encore plus préférentiellement supérieure ou égale à 0,5 mm.

7. Ruban adhésif (11, 12, 21, 22) selon l'une des revendications précédentes, **caractérisé en ce que** la zone de masse adhésive présente une largeur de 3 à 40 mm, de préférence de 4 à 30 mm, plus préférentiellement de 5 à 25 mm, plus préférentiellement de 6 à 15 mm.

8. Ruban adhésif (11, 12, 21, 22) selon l'une des revendications précédentes, **caractérisé en ce que** le ruban adhésif (11, 12, 21, 22) comprend un support, au moins une partie de la masse adhésive étant disposée entre le support et le matériau antiadhésif (3), en particulier **en ce que**
- la masse adhésive est appliquée sur le support, et/ou
- le support est incorporé dans la masse adhésive.

9. Ruban adhésif (11, 12, 21, 22) selon l'une des revendications précédentes, **caractérisé en ce que** le ruban adhésif (11, 12, 21, 22) comprend un autre matériau antiadhésif (3), l'autre matériau antiadhésif (3) comprenant une autre zone de masse adhésive, et la masse adhésive étant appliquée sur l'autre zone de masse adhésive.

10. Ruban adhésif (11, 12, 21, 22) selon la revendication 8, **caractérisé en ce que** l'autre matériau antiadhésif (3) comprend une autre zone de languette de détachement.

11. Utilisation d'un ruban adhésif comprenant plusieurs rubans adhésifs (11, 12, 21, 22), dont chacun est conçu selon l'une des revendications précédentes, les différentes directions longitudinales des bandes adhésives (5) étant disposées parallèlement les unes aux autres, **caractérisée en ce que**
un premier ruban adhésif (11, 21) ayant une première zone de languette de détachement (131, 231) et un second ruban adhésif (12, 22) ayant une seconde zone de languette de détachement (132, 232) sont disposés de telle sorte que la première zone de languette de détachement (131, 231) et la seconde zone de languette de détachement (132, 232) sont adjacentes.

12. Utilisation d'un ruban adhésif selon la revendication 11, **caractérisée en ce que** la première zone de languette de détachement (131, 132) et la seconde zone de languette de détachement (132, 232) s'interpénètrent.

13. Procédé de fabrication de rubans adhésifs, les rubans adhésifs (11, 12, 21, 22) étant conçus comme des rubans adhésifs double face, avec une masse adhésive supérieure et une masse adhésive inférieure, et au moins la masse adhésive supérieure et la masse adhésive inférieure sont recouvertes d'un matériau antiadhésif (3), comprenant les étapes suivantes :
a) fourniture d'un semi-produit de bande adhésive, le semi-produit de bande adhésive comprenant au moins une zone antiadhésive (134, 234), qui est formée sur un matériau antiadhésif (3) et qui est exempte de masse adhésive,
b) séparation dans la zone antiadhésive (134, 234), de façon à produire une première zone de languette de détachement (131, 231) d'un premier matériau antiadhésif (3) d'un premier ruban adhésif (11, 21) des rubans adhésifs, et une seconde zone de languette de détachement (132, 232) d'un second matériau antiadhésif (3) d'un second ruban adhésif (12, 22) des rubans adhésifs,
un premier ruban adhésif (11, 21) et un second ruban adhésif (12, 22) étant formés selon l'une des revendications 1 à 11.

14. Procédé selon la revendication 13, dans lequel, en préparation à l'étape a), dans une étape a'), une masse adhésive mère (101), qui est appliquée sur un matériau antiadhésif mère (130), est structurée de façon qu'au moins une zone antiadhésive (134, 234) soit dégagée, et qu'un semi-produit de ruban adhésif (103) soit produit, en particulier qu'un grand nombre de zones antiadhésives (134, 234) soient dégagées, et qu'un semi-produit de ruban adhésif (103) soit produit.

15. Procédé selon les revendications 13 ou 14, dans lequel, en préparation à l'étape a) ou a'), dans une étape a"), une masse adhésive mère (101) est appliquée sur un matériau antiadhésif mère (130).

16. Procédé selon la revendication 13, dans lequel, en préparation à l'étape a), dans une étape a'"), une masse adhésive est appliquée sur un matériau antiadhésif mère (130) de façon à créer des zones antiadhésives (134, 234) .
